# EUROPEAN PATENT SPECIFICATION

(11) **EP 3 393 233 B1**
(45) Date of publication and mention of the grant of the patent: **17.03.2021**
(21) Application number: 16877846.2
(22) Date of filing: 19.12.2016
(51) Int. Cl.: A01G 9/02, A01G 31/06, A01G 31/04, A01G 31/00

(54) **PLANT CULTIVATION APPARATUS**
PFLANZENZUCHTVORRICHTUNG
APPAREIL DE CULTURE DE PLANTES

(30) Priority: 22.12.2015 FI 20155999
(43) Date of publication of application: 31.10.2018
(73) Proprietor: Amirlatifi, Ali, 33400 Tampere (FI); Amirlatifi, Taru, 33400 Tampere (FI)
(72) Inventor: Amirlatifi, Ali, 33400 Tampere (FI); Amirlatifi, Taru, 33400 Tampere (FI)
(74) Representative: Berggren Oy, Tampere
(86) International application number: PCT/FI2016/050895
(87) International publication number: WO 2017/109279

(56) References cited:
- EP-A2- 2 322 031
- CN-U- 202 759 956
- CN-U- 204 443 485
- US-A- 4 059 922
- US-A- 4 454 684
- US-A- 4 756 120
- US-A- 5 555 676
- US-A1- 2006 032 128
- US-A1- 2012 279 126
- US-A1- 2012 279 126
- US-A1- 2015 096 229
- US-A1- 2015 334 930

## Description

The invention relates to a plant cultivation apparatus according to the preamble of the independent claim
5 directed thereto. The invention is especially related to so called hydroponic cultivation of different kinds of plants.

EP2322031 A2 discloses a plant pot holding device including one or more panels each having a number of compartments formed with a wider front portion and a narrower rear portion for detachably engaging with plant pots, the plant pots each include a lower notch for engaging with the lower inclined surface of the panel and an upper engaging surface and a latch for engaging with the panel and for detachably attaching and latching the plant pots to the panel, the panels each include one or more couplers and one or more socket openings for selectively engaging with each other and for detachably coupling the panels together to form various spatial or three-dimensional shapes and for detachably supporting a number of plant pots.

US20150334930 A1 discloses a modular aeroponic growing column having an elongated first body, a fluid receiving cap, a fluid draining base cap, and a plurality of growing receptacles.

The elongated first body includes a fluid receiving end, an opposite fluid draining end, an interior receiving space extending between the fluid receiving end and the fluid draining end, and a plurality of growing receptacle receiving openings positioned on the first body. The plurality of growing receptacles is positioned in the growing receptacle receiving openings. The receptacles engage the openings of the body for attaching the receptacles to the body.

In patents EP 0352031 and US 4,255,897 there are presented hydroponic plant cultivation growth apparatuses comprising each an openable cultivation space with partly light permeable walls that can be kept closed when needed. Inside the cultivation space there is an endless track for moving plants inside the cultivation space both vertically and horizontally in order to bring about constant lighting conditions for the plants. Movement of the plants on the track is actuated by a motor driven power transmission assembly, consisting of a drive and idle wheel assembly and chains, the chains being arranged on opposite sides of the cultivation space. The plants are planted in loose cultivation bases, the bases being placed furthermore on support bases that are coupled with the chains.

Both of the above solutions bring about a very large sized growth apparatus, because the plants are arranged to move both in vertical and horizontal directions in the cultivation space. In the former solution the plants are being moved in two "draughts" and in the latter for its part in several successive vertical lines. This is why the capacity of particularly the former solution is very modest, because the plants are being moved inside the growth apparatus only in two vertical lines. On the other hand, efficiency of the latter solution is not optimal as such, either, because the plants are in principle in each successive vertical line continuously at an equal distance from each other both horizontally and vertically. Furthermore in this solution, light exposure of the plants, being placed at any given time at the center of each line is not adequately efficient despite the constant distance between the plants.

In patent application publication US 2006/0032128 a hydroponic plant cultivating apparatus is presented having a rotatable, in longitudinal direction modular planting column provided with an integrated internal fluid conduit for delivering a nutrient rich fluid for the plants. The column is mounted in a vertical position and the growth fluid for the growing plants is recycled. The plants are planted in a soilless growth medium within the growth column. The growth column is rotated by an electric motor and the plants are being held on the framework so that roots thereof are inside the framework through holes and/or bottomless sockets in the column modules making thus possible internal (i.e. from inside the growth column) treatment of the roots, being submerged in the planting medium inside the growth column, such as rock wool.

The solution above improves the growth conditions of the plants especially regarding constant illumination thereof to some extent thanks the growth column being rotated. The solution also makes possible adjustment of the height of the growth column depending on how many modules are being used. However, the height of the growth column is in practice limited due to the column starting to sway easily due to being composed of separate modules in longitudinal direction. Because the roots of the plants are submerged in the planting medium inside the growth column, e.g. replacement of only certain plants is difficult requiring removal of an adequate amount of modules on top of the module that needs to be taken care of. Furthermore, the planting medium inside the modules on top of each other forming the column increases the total weight of the column as well as swaying thereof, in addition to which it may cause formation of mold and enhance spreading of diseases between the plants being planted in the same module. This solution is not applicable for large-size plant cultivation.

Furthermore documents CN 202759956 and CN 204443485 disclose rotatable frameworks comprising an elongated structure in longitudinal direction thereof with an uninterruptedly continuing hollow interior making possible spraying a growth medium in liquid form over the whole length of the framework only to the roots of the plants, being held on the sidewalls of the framework. This kind of an implementation is advantageous thanks to the watering principle thereof without a need for using a planting medium inside the framework. Due to fixed sizes and shapes of these kinds of planting devices, the same are not applicable for use in large scale automated plant cultivation.

Despite all development that has taken place during the recent years, hydroponic plant cultivation is not at present at an adequately satisfactory level regarding efficiency of the cultivation due to the problems involved with all prior art solutions.

It is an aim of the plant cultivation apparatus according to the present invention to achieve a decisive improvement in the problems described above and thus to raise essentially the level of prior art. In order to carry out this aim, the plant cultivation apparatus according to the invention is achieved according to the appended claims.

As the most important advantages of the plant cultivation apparatus according to the invention may be mentioned simplicity and efficiency of its construction and use, whereby a very compact cultivation unit within the plant cultivation apparatus is made possible thanks to the easy installation of the module structured framework, which furthermore enables easy adjustment of the size, shape and height of the cultivation apparatus according to the need at any given time. Thanks to the invention, a maximum amount of plants can be placed at freely chosen points on sidewalls of the framework by keeping the total space utilization of the plant cultivation apparatus, however, as low as possible.

The above makes possible easy to use household applications of the present invention. Furthermore especially with respect to more efficient "mass production", the cultivation unit is provided with at least two vertical frameworks that are rotated advantageously in a synchronized manner by a common drive arrangement. Furthermore thanks to the internal treatment of the plants, having only the roots inside the framework and the growth medium in liquid form being sprayed directly on the roots thereof, as efficient as possible recycling of the growth medium is made possible without minimum filtration thereof, if any, by virtue of the growth medium staying clean as long as possible. Furthermore, the cultivation capacity of the plant cultivation apparatus may be significantly increased by using in one and the same plant cultivation apparatus e.g. an adequate amount of cultivation units being placed side by side and/or on top of each other.

Furthermore, thanks to the plants being placed advantageously in removable cultivation baskets to be placed in the holes and/or bottomless sockets in the frameworks, replacement of only certain plants is made as easy as possible. The above together with applying separable or separated sections in the cultivation unit for the two or more rotatable frameworks makes easier preventing spreading of diseases or insects between the plants being planted in different frameworks.

Below is a summary of the applications and advantages of the present invention:
- Optimal utilization of the genetic potential of the plants being cultivated.
- Better control of the plants' nutrition.
- The ability to produce higher yields than in traditional, soil-based agriculture.
- A significant shortening of the growth/production interval for a large variety of species.
- A more efficient use of space.
- An excellent propagation success rate.
- Huge savings on fertilizers, and most important, of water, in a situation of ever increasing global scarcity.
- A total absence of herbicides. To replace pesticides and fungicides, hydroponic growers will often use IPM (Integrated Pest Management) .
- The strength and vigor of plants started in hydroponics then transplanted in soil is such that it opens up enormous commercial perspectives, especially for potted plants.

Other advantageous embodiments of the plant cultivation apparatus according to the invention have been presented in the dependent claims directed thereto.

In the following description, the invention is depicted in detail with reference to the appended drawings, in which:
in figure 1
   is shown as a side view a basic concept with some structural parts of an advantageous plant cultivation apparatus according to the invention,
in figures 2a and 2b
   is shown a side view of an advantageous rotatable framework of a cultivation device according to the invention and a cross sectional detail showing the principle of the present invention in spraying of the growth medium in liquid form for the plants,
in figures 3a-3c
   is shown a side view, a view from the front and a view from above of an advantageous embodiment of the plant cultivation apparatus according to the invention formed of two cultivation units being placed on top of each other,
in figures 4a-4e
   is shown a side view, a cross sectional front view and as views from above as seen from different heights of a cultivation unit showing some advantageous characteristics of the present invention,
in figures 5a and 5b
   is shown a side view and a front view of the embodiment as shown in figures 3a-3c having plants on the rotatable frameworks,
in figure 6
   is shown a side view and a cross section view of an advantageous framework with a module structured composition of a plant cultivation apparatus according to the invention,
in figures 7a-7c
   are shown side views of an advantageous wall element and an enlarged cross section thereof,
in figures 8a-8c
   is shown an advantageous intermediate element as seen from above (8a), as a cross section (8b) and as a detailed view of fastening elements in connection therewith (8c),
in figures 9a-9e
   are shown different views and detailed sections of an advantageous bottom element and its fastening principle with a wall element,
in figure 10
   is shown an advantageous wall element as seen from different directions,
in figure 11
   is shown an advantageous plant cultivation apparatus according to the invention as seen from the front with cross sections thereof as seen from the shown points, and
in figure 12
   is shown a side view and a perspective view of a further advantageous embodiment of the invention in utilizing a plant basket.

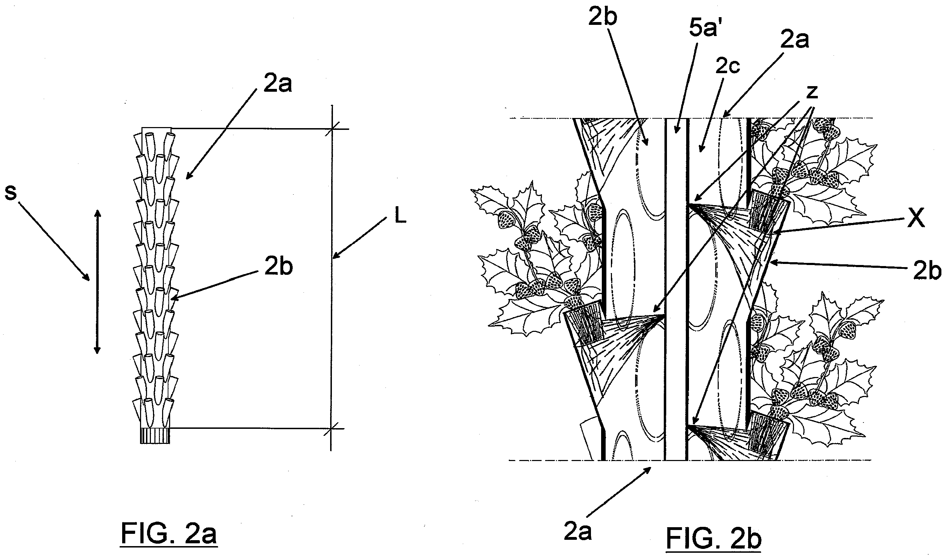

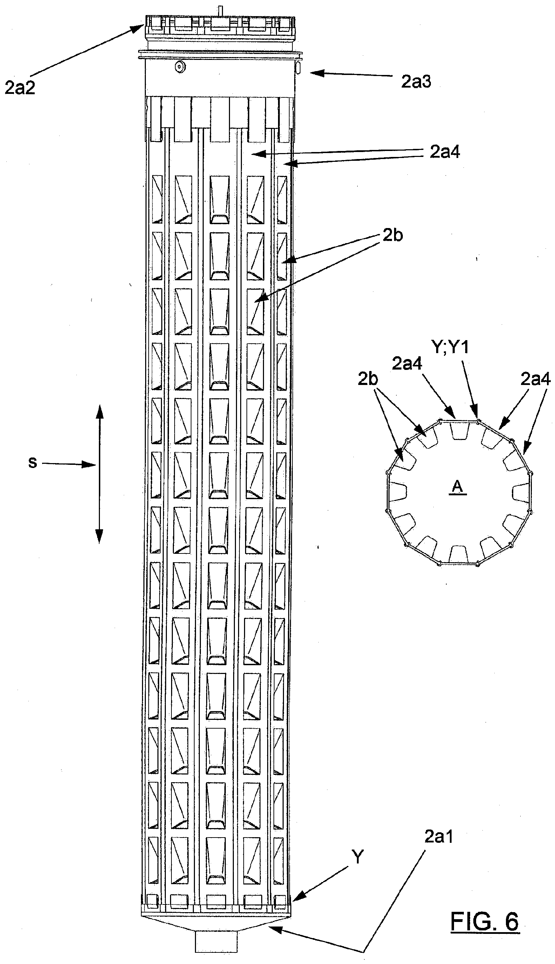

The invention relates to a plant cultivation apparatus comprising a cultivation unit 1 having at least a cultivation device 2 for holding plants to be cultivated and a plant growth arrangement 5, such as a an irrigation, a fertilization, a nutrition system and/or like. The cultivation device 2 consists e.g. on the principle shown in figures 2a and 2b of at least one elongated framework 2a for holding the plants vertically essentially on top of each other and horizontally essentially side by side on sidewalls of the framework, wherein the plants, being held on the framework 2a, have their roots inside the framework 2a through holes and/or sockets 2b in sidewalls thereof making possible internal treatment of the roots from inside the framework 2a. The framework 2a comprises an elongated structure in longitudinal direction s thereof with an uninterruptedly continuing hollow interior 2c making possible spraying z a growth medium in liquid form essentially over the whole length L of the framework only to the roots of the plants, being held on the framework. Particularly with reference to figure 6 the elongated framework 2a is a module structured composition consisting at least of a bottom element 2a1, a top element 2a2 and/or an intermediate element 2a3 and elongated wall elements 2a4 with holes and/or sockets 2b, wherein the elements comprise fastening means Y for coupling of the elements removably with each other on quick release principle.

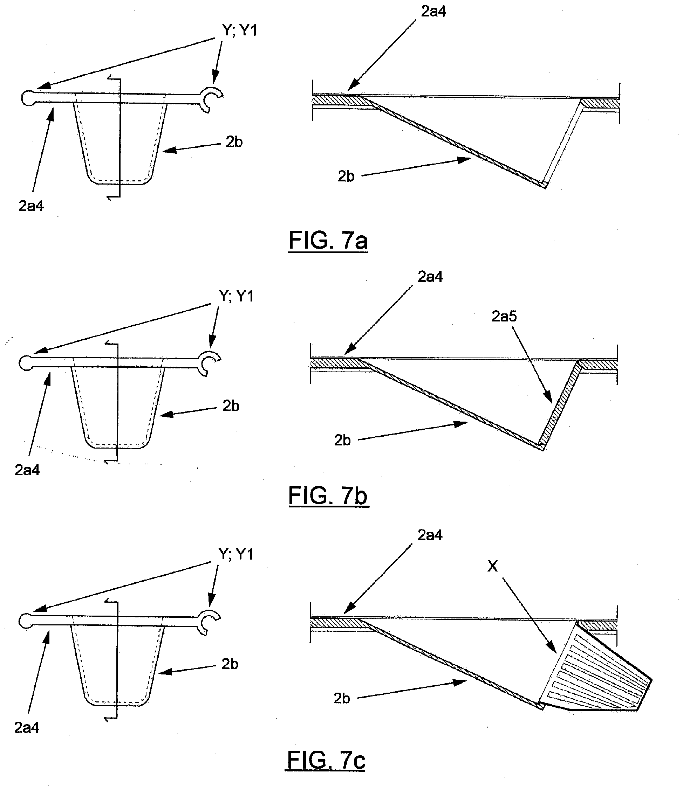

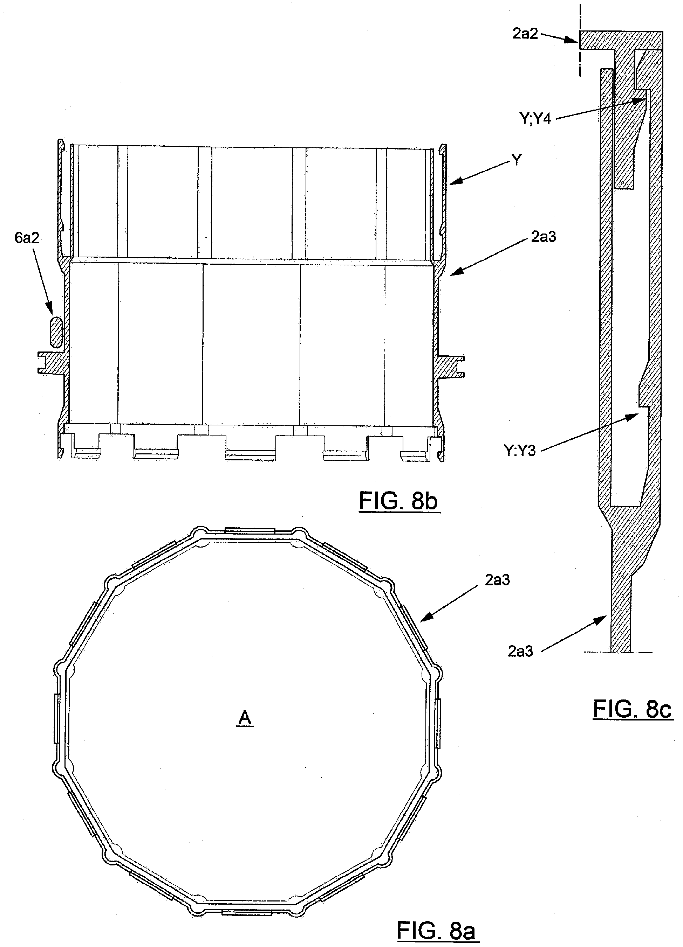

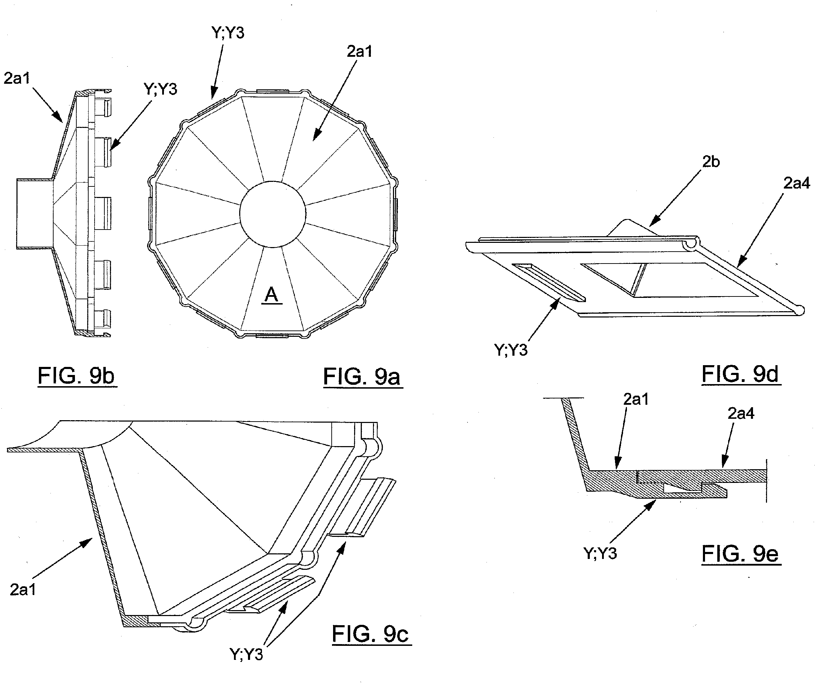

As an advantageous embodiment of the plant cultivation apparatus according to the invention with reference to figures 7a-7c, the fastening means Y; Y1 at opposite longitudinal edges of the wall elements 2a4 are arranged on hinge principle in order to enable adjustable size and/or shape of a cross section area A perpendicular to the longitudinal direction s of the framework 2a by enabling differing angles in the longitudinal joints between the wall elements 2a4. As a further advantageous embodiment of the plant cultivation apparatus according to the invention particularly with reference to figures 8a-8c and 9a-9e, the framework 2a comprises bottom elements 2a1, a top elements 2a2 and/or intermediate elements 2a3 with differing sizes and/or shapes corresponding to the differing sizes and/or shapes of the framework cross section area A.

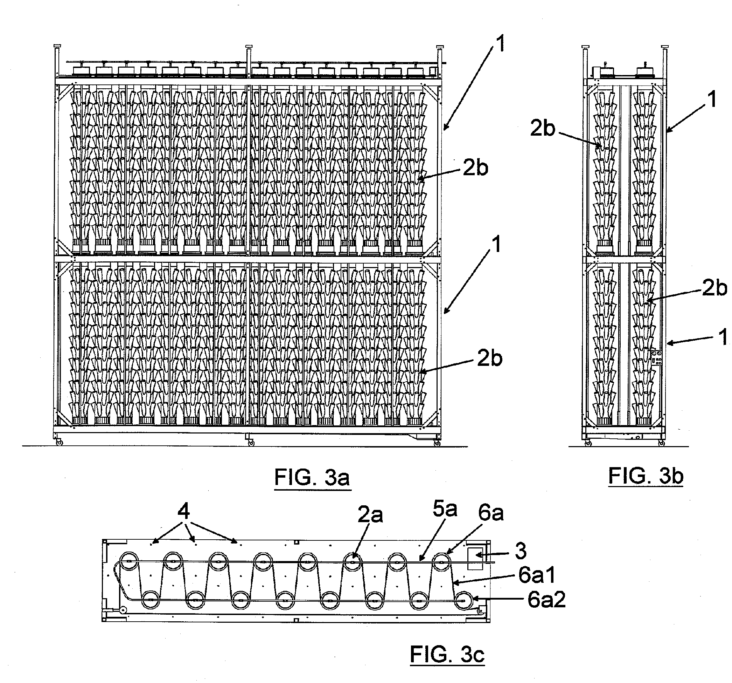

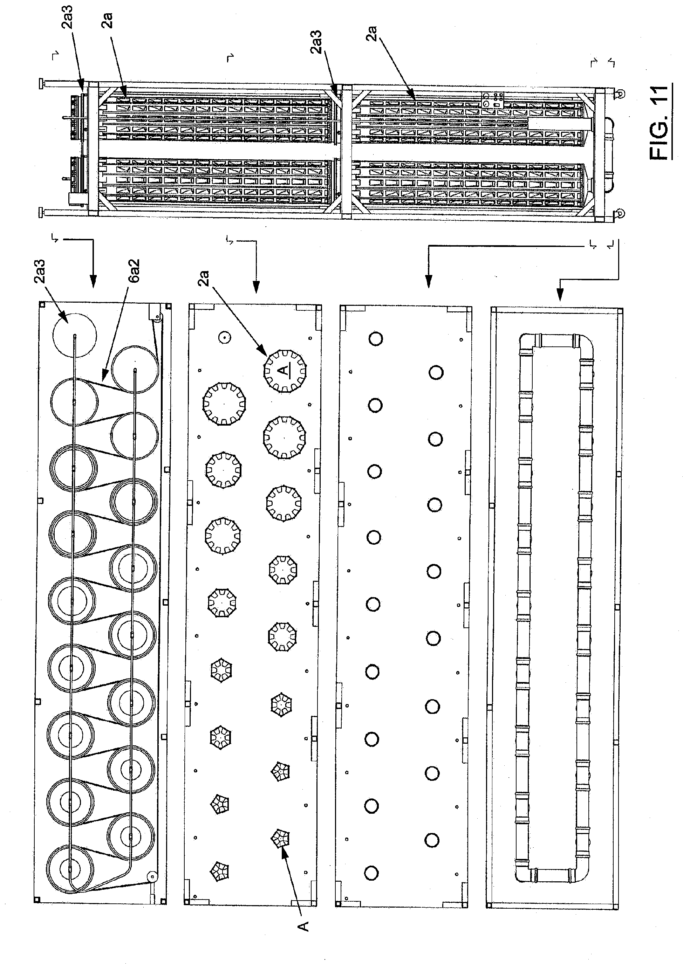

As a further advantageous embodiment of the plant cultivation apparatus according to the invention e.g. with reference to figures 3a-3c and 11, the cultivation device 2 comprises two or more frameworks 2a being coupled on top of each other by the intermediate element 2a3 in order to achieve a desired total height of the apparatus.

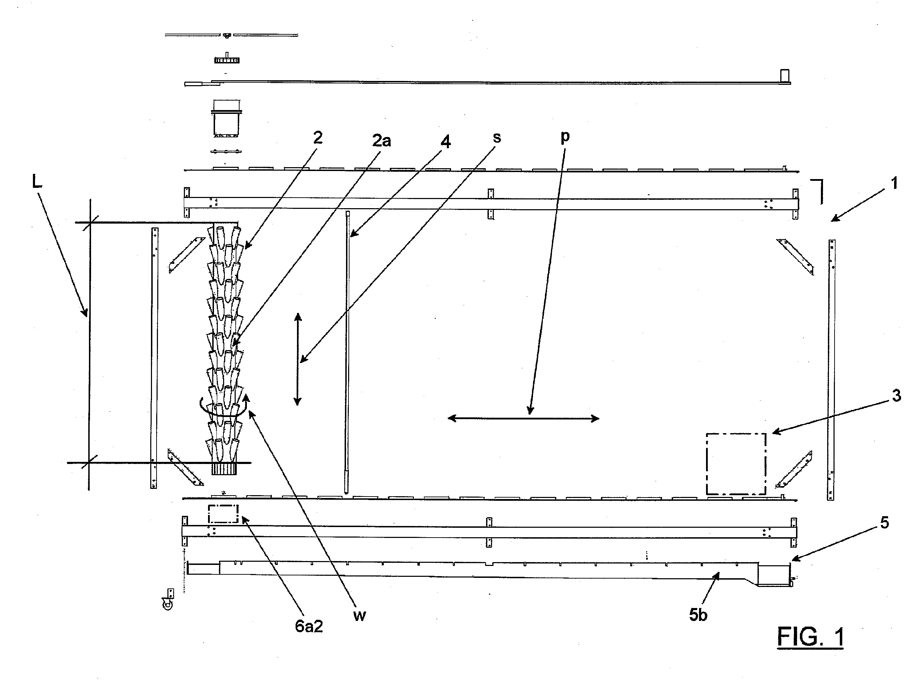

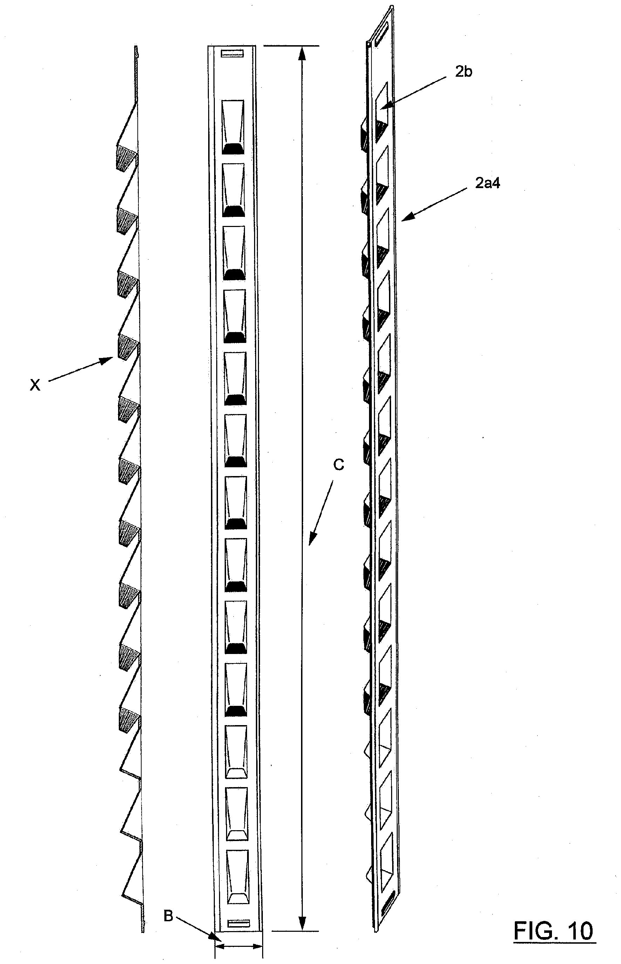

According to the invention and the advantageous embodiment shown e.g. in figure 10, the wall element 2a4 with several holes and/or sockets 2b on top of each other comprise an essentially plane-shaped structure made of essentially flexible material, such as plastics, composite material or the like, preferably with a constant width B and/or length C. The sockets 2b particularly according to figures 6 and 7a-7c are formed of internal formations inside the framework 2a, having a strengthening effect on the framework structure. As an advantageous embodiment of the wall element 2a4 in practice, the element has a constant width B e.g. of 100 mm and length C e.g. of approximately 2000 mm. Furthermore in figure 7b is shown a closing plate 2a5, being placed on the bottom of a socket, which will be left without a plant or plant basket. The sockets in the embodiments shown in figures 1, 2a-2b, 3a-3c and 4a-4e comprise external formations on the framework sidewalls or removable parts to be coupled therewith.

As a further advantageous embodiment in this context, the cross section area A of the framework 2a has a symmetric polygonal shape thanks to the constant width B of the wall elements and same sized angles between the same in the longitudinal joints thereof as shown in the exemplary cross section of the wall element section of the framework 2a in figure 11.

According to the invention and the advantageous embodiments shown e.g. in figures 6, 7a-7c, 8a-8c and 9a-9e, the fastening means Y comprise snap locking arrangements in the elements 2a1, 2a2, 2a3, 2a4 of the framework 2a to be coupled with each other.

As a further advantageous embodiment of the plant cultivation apparatus according to the invention with reference to figures 1,3c and 11, it comprises an auxiliary powered drive arrangement, such as an electrically, pressure medium and/or combustion engine operated drive assembly 6a, for moving the plants in the cultivation unit 1 by rotating w the framework or frameworks 2a around longitudinal s axis thereof in order to make sure constant illumination conditions for the plants.

Regarding more efficient cultivation of plants, the plant cultivation apparatus comprises advantageously furthermore at least one cultivation unit 1 for the plants, being preferably openable and having at least partly transparent walls, a data processing system 3, such as one or more microprocessors, programmable logics and/or like, for controlling indoor climate within the cultivation unit, such as temperature, pressure, humidity, brightness and/or like, an actuator arrangement 4 along with necessary monitoring detectors for monitoring and adjusting the indoor climate, such as a cooling/heating system, an illumination system, a ventilation/ an air conditioning system and/or like. In this context, with reference to the advantageous embodiments shown in figures 1, 3a-3c, 4a-4e, 5a-5e and 11, the cultivation device 2 comprises two or more rotatable frameworks 2a, wherein the illumination system of the actuator arrangement 4 comprises a vertical illumination assembly in connection with the frameworks 2a. In this context e.g. vertical context LED-strips 4 as shown in figures 1 and 3c may be applied, the distance to the frameworks of which may be advantageously arranged adjustable to regulate the light exposure of the plants.

As an advantageous embodiment of the plant cultivation apparatus according to the invention with reference particularly to figures 2b, 7c, and 10 the plants are placed in removable cultivation baskets X to be placed in the holes and/or bottomless sockets 2b in the framework 2a.

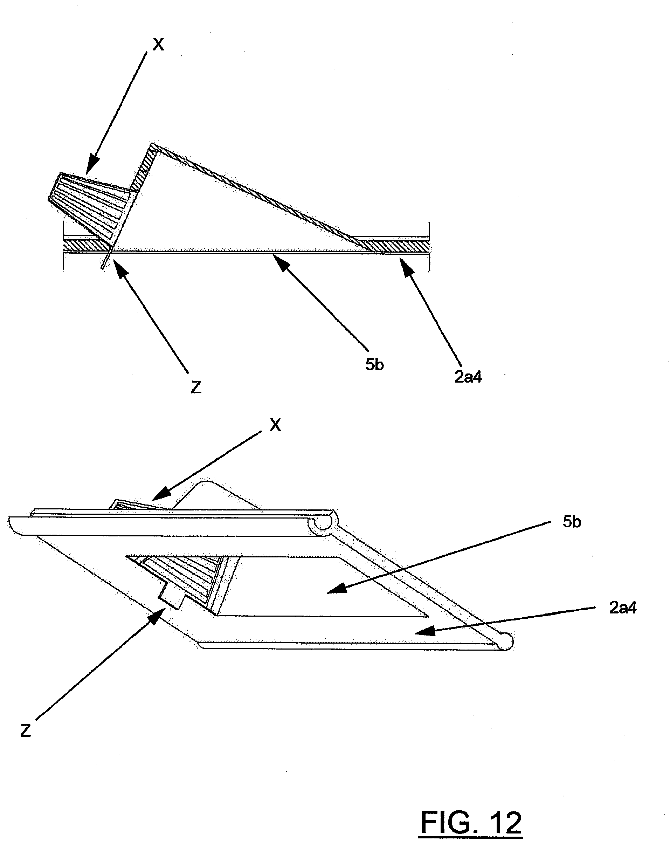

In figure 12 is shown one further advantageous embodiment in this context, wherein size of a hole for the plant basket X on the bottom of the socket 2b is adjustable and the basket has a holder Z, which makes possible e.g. grabbing the basket with a robot arm.

As a furthermore advantageous embodiment of the plant cultivation apparatus according to the invention, in order to treat particularly roots of the plants on the principle as shown in figure 2b, the plant growth arrangement 5 for delivering a growth medium is liquid form for the plants, such as water when necessary with fertilizers, nutrients and/or like, comprises a piping assembly 5a having one or more longitudinal s feed pipes 5a' in the hollow interior 2c of the one or more frameworks 2a of the cultivation device 2. In this context the one or more feed pipes 5a' of the piping assembly 5a comprise nozzles, holes or the like for spraying z the growth medium in liquid form essentially radially toward the roots of the plants.

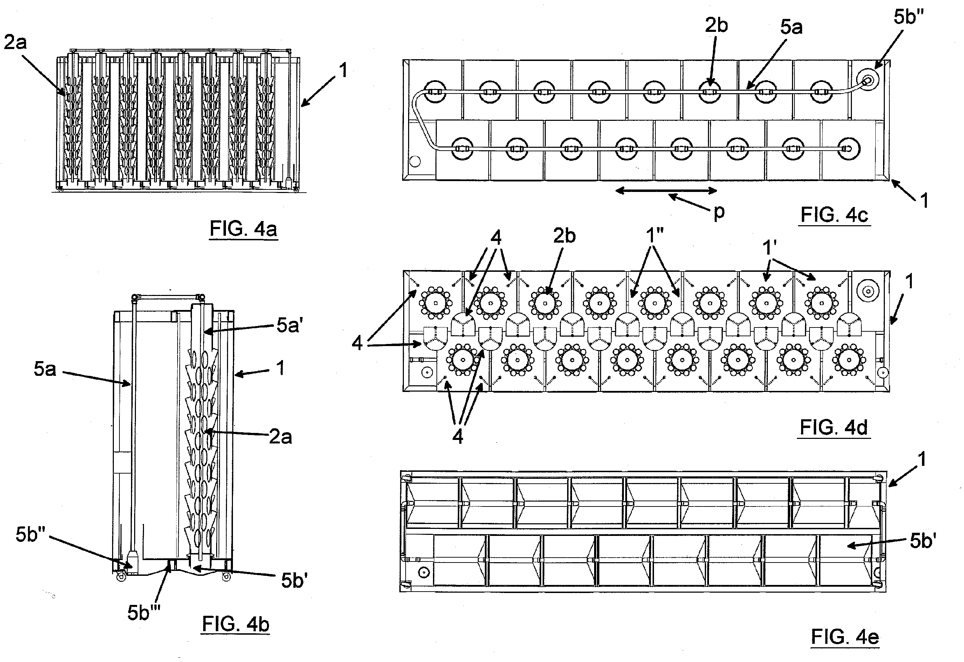

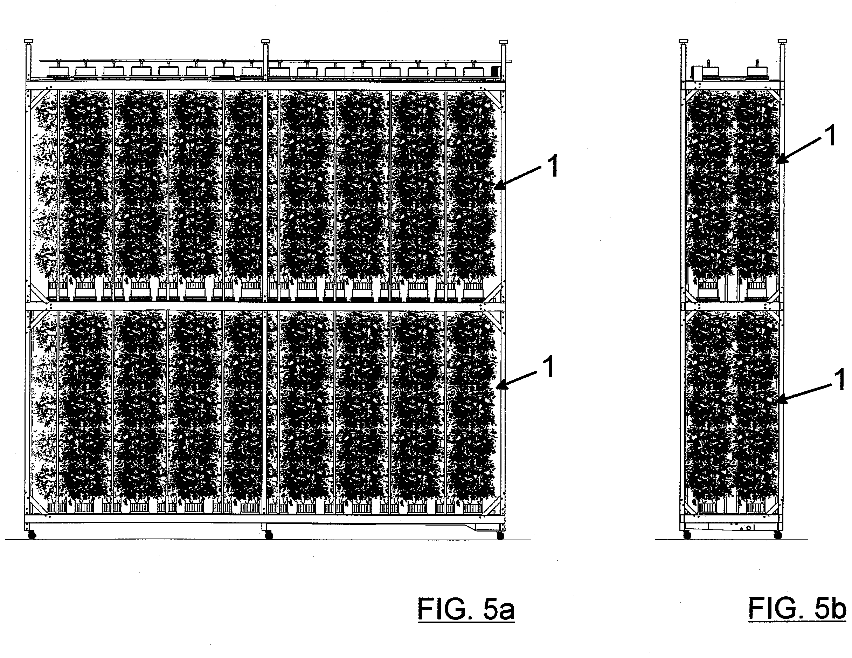

As a furthermore advantageous embodiment of the plant cultivation apparatus according to the invention with reference particularly to figures 1 and 4b, the plant growth arrangement 5 comprises a recirculation system 5b for the growth medium in liquid form, which consists of a collector basin 5b' for collecting the growth medium, a recirculation pump 5b" for recirculating the growth medium and advantageously a filter assembly 5b'" for purifying the growth medium. As shown in figures 5a-5b and 11, the cultivation unit 1 is provided with wheels or rollers for making easier the handling thereof.

Furthermore as an advantageous embodiment of the invention, the cultivation device 2 comprises several rotatable frameworks 2a being placed on the principle as shown in figures 3a-3c, 4a-4c and 11 in at least two parallel lines and one after another in the longitudinal direction p of the cultivation unit 1.

As a furthermore advantageous embodiment of the invention, the cultivation unit 1 has separable or separated sections 1' for one or more frameworks 2a of the cultivation device 2 existing therein, the sections being formed e.g. as shown particularly in figure 4d with intermediate walls 1" between the frameworks.

Furthermore as an advantageous embodiment of the plant cultivation apparatus with reference e.g. to figures 3c and 11, the drive assembly 6a of the auxiliary powered driving arrangement comprises a power transmission system for operating two or more rotatable frameworks 2a of the cultivation device 2 simultaneously by means of a common engine or motor 6a1 through a cardan shaft, a belt drive 6a2 or in a corresponding manner.

As a furthermore advantageous embodiment of the plant cultivation apparatus, it comprises two or more cultivation units 1 being placed side by side and/or on top of each other as shown in figures 3a-3c, 5a-5b and 11.

The illumination system of the actuator arrangement 4 may comprise e.g. LEDs for producing light accurately at certain frequencies by utilizing e.g. blue, green, red, far red and/or the like LEDs, or instead or in addition to the above, e.g. traditional high pressure sodium (HPC) lamps or the like, or whatever illumination arrangements suitable for the purpose.

It is clear that the invention is not limited to the embodiments presented or described above, but instead, it can naturally be carried out for the part of its technical structures in very many ways e.g. by utilizing more or less curved wall elements etc. Furthermore there are numerous plants, herbs and vegetables that may be grown by utilizing the invention that require essentially different kinds of configurations of the plant cultivation apparatus according to the invention and/or circumstances in connection therewith.

It is thus clear that also e.g. movement of the rotatable frameworks can be carried out by separate motors rotating only one or a couple of the frameworks within the same cultivation unit. Furthermore the parts of the plant cultivation apparatus according to the invention requiring strength and thermal insulation can be manufactured e.g. from stainless steel, galvanized metal or light alloy, such as aluminum, or when applicable by using reinforced plastics, carbon fiber or corresponding materials. Also the transparent walls of the apparatus may comprise thermally insulated glass structures or simply single layers of transparent plastic like e.g. so called plexiglass. Furthermore it is naturally possible to arrange in connection with a plant cultivation apparatus e.g. an external moisturizing assembly for the plants as well as required automation in order to operate and control the same in order to make sure adequate humidity within the apparatus, or a shading assembly to avoid excessive sun exposure of the plants.

## Claims

1. Plant cultivation apparatus comprising a cultivation unit (1) having at least a cultivation device (2) for holding plants to be cultivated and a plant growth arrangement (5), such as a an irrigation, a fertilization, a nutrition system and/or like, wherein the cultivation device (2) consists of at least one elongated framework (2a) for holding the plants vertically essentially on top of each other and horizontally essentially side by side on sidewalls of the framework, wherein the plants, being held on the framework (2a), have their roots inside the framework (2a) through sockets (2b) in sidewalls thereof making possible internal treatment of the roots from inside the framework (2a), and, wherein the framework (2a) comprises an elongated structure in longitudinal direction (s) thereof with an uninterruptedly continuing hollow interior (2c) making possible spraying (z) a growth medium in liquid form essentially over the whole length (L) of the framework only to the roots of the plants, being held on the framework, the elongated framework (2a) is a module structured composition consisting at least of a bottom element (2a1), a top element (2a2) and/or an intermediate element (2a3) and elongated wall elements (2a4) with sockets (2b), the elements comprising fastening means (Y) for coupling of the elements removably with each other on quick release principle, wherein the elongated wall elements (2a4) are essentially plane-shaped structures coupled to both each other and either between the bottom element and the top element or between the intermediate element and the bottom element or the top element, and the elongated wall elements (2a4) are made of essentially flexible material and the fastening means (Y) comprise snap locking arrangements in the elements (2a1, 2a2, 2a3, 2a4) to be coupled with each other and the sockets are formed of internal formations of the elongated wall elements inside the framework (2a), having a strengthening effect on the framework structure.

2. Plant cultivation apparatus according to claim 1, **characterized in that**, the fastening means (Y; Y1) at opposite longitudinal edges of the wall elements (2a4) are arranged on hinge principle in order to enable adjustable size and/or shape of a cross section area (A) perpendicular to the longitudinal direction (s) of the framework (2a), by enabling differing angles in the longitudinal joints between the wall elements (2a4) .

3. Plant cultivation apparatus according to claim 2, **characterized in that**, the framework (2a) comprises bottom elements (2a1), top elements (2a2) and/or intermediate elements (2a3) with differing sizes and/or shapes corresponding to the differing sizes and/or shapes of the framework cross section area (A).

4. Plant cultivation apparatus according to any of the preceding claims 1 -3, **characterized in that**, the cultivation device (2) comprises two or more frameworks (2a) being coupled on top of each other by the intermediate element (2a3) in order to achieve a desired total height of the apparatus.

5. Plant cultivation apparatus according to any of the preceding claims 1 -4, **characterized in that**, the wall elements (2a4) are made of plastics, composite material or the like, preferably with a constant width (B) and/or length (C).

6. Plant cultivation apparatus according to any of the preceding claims 1 - 5, **characterized in that**, the apparatus comprises removable plant cultivation baskets (X) to be fastened in the sockets (2b) in the wall elements (2a4) of the one or more frameworks (2a) of the cultivation device (2).

7. Plant cultivation apparatus according to any of the preceding claims 1-6, **characterized in that**, the plant growth arrangement (5) for delivering the growth medium in liquid form for the plants, such as water when necessary with fertilizers, nutrients and/or like, comprises a piping assembly (5a) having one or more longitudinal (s) feed pipes (5a') in the hollow interior (1c) of the one or more frameworks (2a) of the cultivation device (2) .

8. Plant cultivation apparatus according to claim 7, **characterized in that**, the one or more feed pipes (5a') of the piping assembly (5a) comprise nozzles, holes or the like for spraying the growth medium in liquid form essentially radially toward the roots of the plants.

9. Plant cultivation apparatus according to claim 7 or 8, **characterized in that**, the plant growth arrangement (5) comprises a recirculation system (5b) for the growth medium, having a collector basin (5b') for collecting the growth medium, a recirculation pump (5b") for recirculating the growth medium and preferably a filter assembly (5b'") for purifying the growth medium.

10. Plant cultivation apparatus according to any of the preceding claims 1 - 9, **characterized in that**, the cultivation unit (1) has separable or separated sections (1') for the one or more frameworks (2a) of the cultivation device (2) existing therein.

11. Plant cultivation apparatus according to any of the preceding claims 1 - 10, **characterized in that**, it comprises two or more cultivation units (1) being placed side by side and/or on top of each other.

## Patentansprüche

1. Pflanzenkultivierungsvorrichtung, umfassend eine Kultivierungseinheit (1) mit mindestens einer Kultivierungsvorrichtung (2) zum Halten von zu kultivierenden Pflanzen und einer Pflanzenwachstumsanordnung (5), wie einer Bewässerung, einer Düngung, einem Ernährungssystem und/oder dergleichen, wobei die Kultivierungsvorrichtung (2) aus mindestens einem länglichen Gerüst (2a) besteht, um die Pflanzen vertikal im Wesentlichen übereinander und horizontal im Wesentlichen nebeneinander an Seitenwänden des Gerüsts zu halten, wobei die Pflanzen, die auf dem Gerüst (2a) gehalten werden, ihre Wurzeln innerhalb des Gerüsts (2a) durch Sockel (2b) in Seitenwänden davon haben, was eine interne Behandlung der Wurzeln von innerhalb des Gerüsts (2a) ermöglicht, und wobei das Gerüst (2a) eine längliche Struktur in Längsrichtung (s) davon mit einem ununterbrochen fortgesetzten hohlen Innenraum (2c) umfasst, was das Sprühen (z) eines Wachstumsmediums in flüssiger Form im wesentlichen über die gesamte Länge (L) des Gerüsts nur auf die Wurzeln der Pflanzen ermöglicht, die auf dem Gerüst gehalten werden, wobei das längliche Gerüst (2a) eine modulstrukturierte Zusammensetzung ist, die mindestens aus einem Bodenelement (2a1), einem Oberelement (2a2) und/oder einem Zwischenelement (2a3) und länglichen Wandelementen (2a4) mit Sockeln (2b) besteht, die Elemente Befestigungsmittel (Y) zum entkoppelbaren Koppeln der Elemente untereinander nach dem Schnellverschlussprinzip umfassen, wobei die länglichen Wandelemente (2a4) im Wesentlichen ebene Strukturen sind, die miteinander und entweder zwischen dem unteren Element und dem oberen Element oder zwischen dem Zwischenelement und dem unteren Element oder dem oberen Element gekoppelt sind und die länglichen Wandelemente (2a4) aus im Wesentlichen flexiblem Material bestehen und die Befestigungsmittel (Y) Schnappverriegelungsanordnungen in den miteinander zu koppelnden Elementen (2a1, 2a2, 2a3, 2a4) umfassen und die Sockel aus inneren Bildungen der länglichen Wandelemente innerhalb des Gerüsts (2a) gebildet sind, was eine verstärkende Wirkung auf die Gerüststruktur hat.

2. Pflanzenkultivierungsvorrichtung nach Anspruch 1, **dadurch gekennzeichnet, dass** die Befestigungsmittel (Y; Y1) an gegenüberliegenden Längskanten der Wandelemente (2a4) nach dem Scharnierprinzip angeordnet sind, um eine einstellbare Größe und/oder Form einer Querschnittsfläche (A) senkrecht zur Längsrichtung (s) des Gerüsts (2a) zu ermöglichen, indem unterschiedliche Winkel in den Längsfugen zwischen den Wandelementen (2a4) ermöglicht werden.

3. Pflanzenkultivierungsvorrichtung nach Anspruch 2, **dadurch gekennzeichnet, dass** das Gerüst (2a) Bodenelemente (2a1), Oberelemente (2a2) und/oder Zwischenelemente (2a3) mit unterschiedlichen Größen und/oder Formen aufweist, die den unterschiedlichen Größen und/oder Formen der Gerüstquerschnittsfläche (A) entsprechen.

4. Pflanzenkultivierungsvorrichtung nach einem der vorhergehenden Ansprüche 1 bis 3, **dadurch gekennzeichnet, dass** die Kultivierungsvorrichtung (2) zwei oder mehr Gerüste (2a) umfasst, die durch das Zwischenelement (2a3) der Reihe nach übereinander gekoppelt sind um eine gewünschte Gesamthöhe der Vorrichtung zu erreichen.

5. Pflanzenkultivierungsvorrichtung nach einem der vorhergehenden Ansprüche 1 bis 4, **dadurch gekennzeichnet, dass** die Wandelemente (2a4) aus Kunststoffen, Verbundwerkstoffen oder dergleichen, vorzugsweise mit einer konstanten Breite (B) und/oder Länge (C) bestehen.

6. Pflanzenkultivierungsvorrichtung nach einem der vorhergehenden Ansprüche 1 bis 5, **dadurch gekennzeichnet, dass** die Vorrichtung entfernbare Pflanzenkultivierungskörbe (X) umfasst, die in den Sockeln (2b) in den Wandelementen (2a4) des einen oder der mehreren Gerüste (2a) der Kultivierungsvorrichtung (2) zu befestigen sind.

7. Pflanzenkultivierungsvorrichtung nach einem der vorhergehenden Ansprüche 1 bis 6, **dadurch gekennzeichnet, dass** die Pflanzenwachstumsanordnung (5) zur Abgabe des Wachstumsmediums in flüssiger Form für die Pflanzen, wie Wasser, falls erforderlich, mit Düngemitteln, Nährstoffen und/oder dergleichen eine Rohrleitungsanordnung (5a) umfasst, die eine oder mehrere längliche (s) Zufuhrrohre (5a') im hohlen Inneren (1c) des einen oder der mehreren Gerüste (2a) der Kultivierungsvorrichtung (2) aufweist.

8. Pflanzenkultivierungsvorrichtung nach Anspruch 7, **dadurch gekennzeichnet, dass** die eine oder mehreren Zufuhrrohre (5a') der Rohrleitungsanordnung (5a) Düsen, Löcher oder dergleichen zum Sprühen des Wachstumsmediums in flüssiger Form im Wesentlichen radial in Richtung der Wurzeln der Pflanzen umfassen.

9. Pflanzenkultivierungsvorrichtung nach Anspruch 7 oder 8, **dadurch gekennzeichnet, dass** die Pflanzenwachstumsanordnung (5) ein Rezirkulationssystem (5b) für das Wachstumsmedium mit einem Sammelbecken (5b') zum Sammeln des Wachstumsmediums, einer Umwälzpumpe (5b") zum Umwälzen des Wachstumsmediums und vorzugsweise einer Filteranordnung (5b''') zum Reinigen des Wachstumsmediums umfasst.

10. Pflanzenkultivierungsvorrichtung nach einem der vorhergehenden Ansprüche 1 bis 9, **dadurch gekennzeichnet, dass** die Kultivierungseinheit (1) trennbare oder getrennte Abschnitte (1') für das eine oder die mehreren Gerüste (2a) der Kultivierungsvorrichtung (2) aufweist, die darin existieren.

11. Pflanzenkultivierungsvorrichtung nach einem der vorhergehenden Ansprüche 1 bis 10, **dadurch gekennzeichnet, dass** sie zwei oder mehr Kultivierungseinheiten (1) umfasst, die nebeneinander und/oder übereinander angeordnet sind.

## Revendications

1. Appareil de culture de plantes comprenant une unité de culture (1) munie d'au moins un dispositif de culture (2) destiné à retenir les plantes à cultiver et un agencement de croissance de plantes (5), tel qu'un système d'irrigation, de fertilisation, de nutrition et/ou analogue, dans lequel le dispositif de culture (2) se compose d'au moins un cadre allongé (2a) destiné à retenir les plantes à la verticale essentiellement au-dessus les unes des autres et à l'horizontale essentiellement côte à côte sur des parois latérales du cadre, dans lequel les plantes, étant retenues sur le cadre (2a), ont leurs racines à l'intérieur du cadre (2a) à travers des cavités (2b) dans des parois latérales de celui-ci rendant possible un traitement interne des racines depuis l'intérieur du cadre (2a), et, dans lequel le cadre (2a) comprend une structure allongée dans une direction longitudinale (s) de celui-ci avec un intérieur creux se poursuivant de manière ininterrompue (2c) rendant possible la pulvérisation (z) d'un milieu de croissance sous une forme liquide essentiellement sur toute la longueur (L) du cadre uniquement aux racines des plantes, étant retenues sur le cadre, le cadre allongé (2a) est une composition structurée par modules se composant d'au moins un d'un élément inférieur (2al), d'un élément supérieur (2a2) et/ou d'un élément intermédiaire (2a3) et d'éléments de paroi allongés (2a4) avec des cavités (2b), les éléments comprenant un moyen de fixation (Y) destiné à coupler les éléments de manière amovible les uns aux autres selon le principe de libération rapide, dans lequel les éléments de paroi allongés (2a4) sont essentiellement des structures de forme plane couplées à la fois les unes aux autres et soit entre l'élément inférieur et l'élément supérieur soit entre l'élément intermédiaire et l'élément inférieur ou l'élément supérieur, et les éléments de paroi allongés (2a4) sont constitués d'un matériau essentiellement flexible et le moyen de fixation (Y) comprend des agencements de verrouillage par encliquetage dans les éléments (2a1, 2a2, 2a3, 2a4) à coupler les uns aux autres et les cavités sont formées de formations internes des éléments de paroi allongés à l'intérieur du cadre (2a), ayant un effet de renforcement sur la structure de cadre.

2. Appareil de culture de plantes selon la revendication 1, **caractérisé en ce que** les moyens de fixation (Y ; Y1) au niveau de bords longitudinaux opposés des éléments de paroi (2a4) sont agencés selon un principe de charnière afin de permettre une taille et/ou une forme réglable d'une section transversale (A) perpendiculaire à la direction longitudinale (s) du cadre (2a), en permettant des angles différents dans les articulations longitudinales entre les éléments de paroi (2a4).

3. Appareil de culture de plantes selon la revendication 2, **caractérisé en ce que** le cadre (2a) comprend des éléments inférieurs (2a1), des éléments supérieurs (2a2) et/ou des éléments intermédiaires (2a3) avec des tailles et/ou des formes différentes correspondant aux tailles et/ou aux formes différentes de la section transversale (A) de cadre.

4. Appareil de culture de plantes selon l'une quelconque des revendications précédentes 1 à 3, **caractérisé en ce que** le dispositif de culture (2) comprend deux cadres (2a) ou plus étant couplés au-dessus les uns des autres par l'élément intermédiaire (2a3) afin d'atteindre une hauteur totale souhaitée de l'appareil.

5. Appareil de culture de plantes selon l'une quelconque des revendications précédentes 1 à 4, **caractérisé en ce que** les éléments de paroi (2a4) sont constitués de plastique, de matériau composite ou analogue, de préférence avec une largeur (B) et/ou une longueur (C) constantes.

6. Appareil de culture de plantes selon l'une quelconque des revendications précédentes 1 à 5, **caractérisé en ce que** l'appareil comprend des corbeilles de culture de plantes amovibles (X) à fixer dans les cavités (2b) dans les éléments de paroi (2a4) des un ou plusieurs cadres (2a) du dispositif de culture (2).

7. Appareil de culture de plantes selon l'une quelconque des revendications précédentes 1 à 6, **caractérisé en ce que** l'agencement de croissance de plantes (5) destiné à délivrer le milieu de croissance sous forme liquide pour les plantes, tel que de l'eau si nécessaire avec des engrais, des nutriments et/ou analogue, comprend un ensemble tuyauterie (5a) muni d'un ou de plusieurs tuyaux d'alimentation (5a') longitudinaux (s) dans l'intérieur creux (1c) des un ou plusieurs cadres (2a) du dispositif de culture (2).

8. Appareil de culture de plantes selon la revendication 7, **caractérisé en ce que** les un ou plusieurs tuyaux d'alimentation (5a') de l'ensemble tuyauterie (5a) comprennent des buses, des trous ou analogue pour pulvériser le milieu de croissance sous forme liquide essentiellement radialement vers les racines des plantes.

9. Appareil de culture de plantes selon la revendication 7 ou 8, **caractérisé en ce que** l'agencement de croissance de plantes (5) comprend un système de recyclage (5b) pour le milieu de croissance, muni d'un bassin collecteur (5b') destiné à collecter le milieu de croissance, une pompe de recyclage (5b") destinée à recycler le milieu de croissance et de préférence un ensemble filtre (5b''') destiné à purifier le milieu de croissance.

10. Appareil de culture de plantes selon l'une quelconque des revendications précédentes 1 à 9, **caractérisé en ce que** l'unité de culture (1) a des sections séparables ou séparées (1') pour les un ou plusieurs cadres (2a) du dispositif de culture (2) se trouvant à l'intérieur de celle-ci.

11. Appareil de culture de plantes selon l'une quelconque des revendications précédentes 1 à 10, **caractérisé en ce qu'**il comprend deux unités de culture (1) ou plus étant placées côte à côte et/ou au-dessus les unes des autres.
